Europäisches Patentamt

(19) European Patent Office

Office européen des brevets

(11) Publication number: **0 137 976**
A2

## (12) EUROPEAN PATENT APPLICATION

(21) Application number: **84109952.6**

(22) Date of filing: **21.08.84**

(51) Int. Cl.⁴: **G 01 B 11/30**

(30) Priority: **13.10.83 US 541632**

(43) Date of publication of application: **24.04.85**
**Bulletin 85/17**

(84) Designated Contracting States: **DE FR GB NL**

(71) Applicant: **THE PERKIN-ELMER CORPORATION, Main Avenue, Norwalk Connecticut 06856 (US)**

(72) Inventor: **Bystricky, Karl M., 75 Wilton Road East, Ridgefield Connecticut 06877 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

(54) Interferometric metrology of surface figures.

(57) A diffraction grating with circular grooves whose frequency is a radial variable useful as a null corrector in an apparatus for testing the optical figure of a surface. A circularly ruled grating with unequal spaces between rulings functions to cause the rays of a monochromatic beam reflected from or transmitted through the test surface to be reflected or transmitted as a substantially perfect wavefront. This permits the reflected or transmitted beam to be combined with a reference beam to form a fringe pattern indicative of deviation of the test surface from the required surface figure.

GRÜNECKER, KINKELDEY, STOCKMAIR & PARTNER

PATENTANWÄLTE
EUROPEAN PATENT ATTORNEYS

A. GRÜNECKER, DIPL.-ING.
DR. H. KINKELDEY, DIPL.-ING.
DR. W. STOCKMAIR, DIPL.-ING., A.E.E. (CALTECH)
DR. K. SCHUMANN, DIPL.-PHYS.
P. H. JAKOB, DIPL.-ING.
DR. G. BEZOLD, DIPL.-CHEM.
W. MEISTER, DIPL.-ING.
H. HILGERS, DIPL.-ING.
DR. H. MEYER-PLATH, DIPL.-ING.

8000 MÜNCHEN 22
MAXIMILIANSTRASSE 58

## BACKGROUND OF THE INVENTION

In the interferometric testing of optical reflecting elements to determine whether or not the optical element conforms to design criteria it is often necessary to utilize a null corrector. This is necessary inasmuch as use of an interferometer as the test instrument requires that the wavefront reflected from or transmitted through the optical element undergoing test have a wavefront capable of being combined with a reference beam to form a fringe pattern indicative of the extent of deviation of the test surface from the required surface figure.

In accomplishing the foregoing null correctors introduce those aberrations into the test beam which complement the figure of the test surface so that each ray of the beam meets or leaves the test surface perpendicularly and so that a perfect or near perfect wavefront can be provided which is capable of interfering with a reference wavefront to form the desired fringe pattern.

Null correctors have heretofore employed various combinations of lenses which increase in complexity as the complexity of the figure of the test surface increases. When testing a large aspherical mirror like the primary mirror of a space telescope the design and also the fabrication of a lens type null corrector becomes extremely difficult and prohibitively costly. When it comes

0137976

testing a conical surface of the Walter Type I, II or III or an Axicon type surface especially when it is powered, it is practically impossible to design an adequate null lens assembly.

The present invention contemplates an interferometeric system for testing conformance of the figure of a test surface with the designed figure of the surface which utilizes a single circularly ruled grating in place of the plurality of lenses necessary to form a null corrector of conventional design. In so doing the problems mentioned above are overcome.

## BRIEF SUMMARY OF THE INVENTION

The present invention relates to an apparatus for testing the figure of an optical surface. The beam from a laser source is directed to the surface to be tested via a circularly ruled grating. The rulings of the gratings are unequally spaced in accordance with known design criteria to insure that each ray of the beam is reflected or tramsmitted to form a perfect or near perfect wavefront which is adapted to be combined with a reference wavefront to form a fringe pattern which is indicative of a deviation, if any, of the figure of the test surface from the required figure. A record of the fringe pattern may be made to permit further processing the test surface until it meets the design criteria.

## BRIEF DESCRIPTION OF THE DRAWINGS

Figure 1 illustrates a circularly ruled grating of the type used in the present invention;

Figure 2 illustrates an interferometer for testing the surface of an axicon wherein the null corrector arm includes the grating of this invention;

Figure 3 illustrates a null corrector arm for use with the interferometer of Figure 2 for testing the surface of an aspheric; and

Figure 4 illustrates a null corrector arm for use with the interferometer of Figure 2 for testing the surface of a paraboloid segment.

## DESCRIPTION

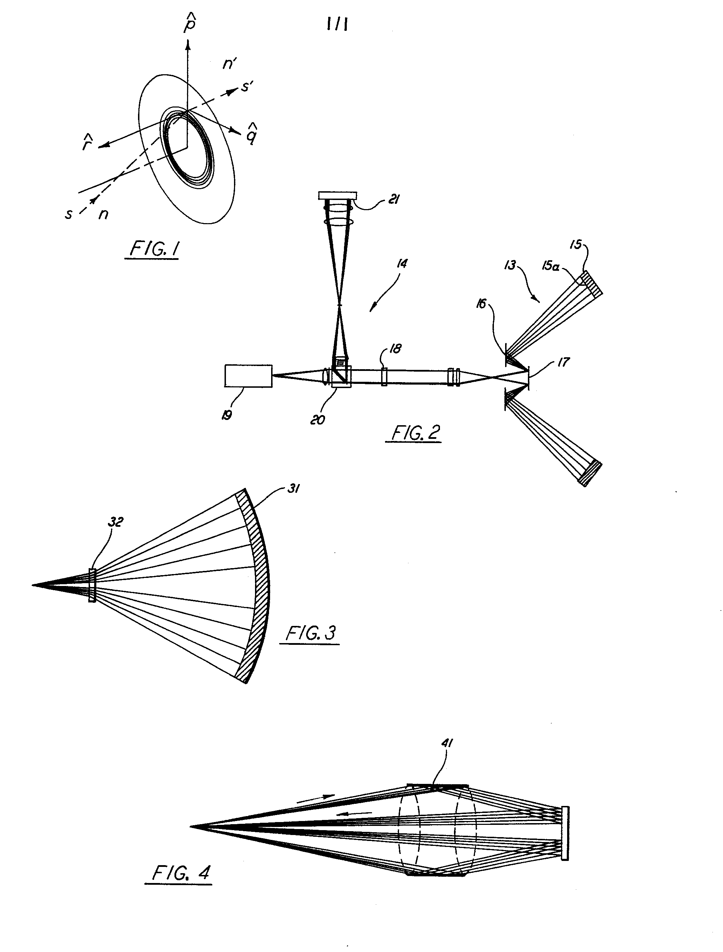

Referring now more particularly to Figure 1 there is shown a circularly ruled grating 11. If the spaces between rulings on a circularly ruled grating 11 are equal, it behaves as a linear axicon when placed in a converging beam, i.e., it diffracts the light away from the axis to focus to a ring according to the well known grating equation:

$$\sin i^1 - \sin i = m\lambda F \qquad (1)$$

where $i$ and $i^1$ are the angles from the surface normal of the incident and diffracted rays, respectively, $m$ is the diffraction order, $\lambda$ is the wavelength and $F$ is the grating frequency. However, when object and image are exchanged, the ring becomes a regular diverging beam.

If, however, the circular grating is ruled with a linear change in frequency according to the expression:

$$F_r = F_1 r \qquad (2)$$

where $F$ is the grating frequency and $r$ is the radial location of each ruling the grating focuses light to a point on the axis of the grating. Eq 2 is, of course, the formula for a zone lens.

When the rulings on the grating are unequally spaced according to power polynomial equation:

$$F_r = \sum_{n=0}^{K} F_n \, r^n \qquad (3)$$

higher order wavefront errors or aberrations are introduced. Even though there is no physical distance traversed, the ray is assigned one wave of OPD per grating line, as it would be for a linear grating. The frequency equation is integrated from the principal ray radius ($r_p$) to the intersection radius in order to obtain

$$OPD = m\lambda \int_{r_p}^{r} F_r \, dr = m\lambda \sum_{n=0}^{K} \frac{F_n \, r^{n+1} - r_p^{n+1}}{N+1}$$

a ray that strikes the center of the grating is undeviated.

In Figure 1 the grating frequency Fr at any radial location r can be represented by the polynominal of Eq. (3). Unit vectors associated with the grating are p, normal to the line connecting the grating center to the point of intersection; q, target to the rulings and r, normal to the grating. For a ray traveling in the direction of unit vector S, the m$^{th}$ order of diffraction has a maximum intensity in the direction of $S^1$ according to the relation:

$$n' \, s' \times r = n \, S \times r + (m\lambda F_r) \, q \qquad (4)$$

where n and n$^1$ are the refractive indices before and after the grating respectively. A ray traveling in the meridional plane is bent at the grating by the simplified grating equation:

$$n' \sin i' = n \sin i + m\lambda F_r \qquad (5)$$

While Figure 1 shows a transmitting grating the foregoing analysis applies equally well to a reflecting type grating.

The foregoing analysis further shows that unequal spaced gratings can be designed for generating null wavefronts for various optics such as, e.g., axicon elements, aspherics, and conical segments.

Figure 2 shows an interferometer for testing the surface figure of an axicon ring mirror. The interferometer comprises a null corrector arm 13 and an interferometer proper 14. The null corrector arm 13 comprises the axicon ring mirror 15 having a surface 15a. The axicon ring mirror 15, shown in cross section, is an annular ring concentric with the optical axis of the system. The surface of ring mirror 15 is not flat normally but has a surface which follows the higher order terms of Eq (3). The null corrector arm 13 further comprises a reflecting circularly ruled grating 16 disposed concentric with the optical axis of the system and a convex spherical mirror 17. The grating 16 has a central opening and the spherical mirror 17 is disposed to reflect light to and from the surface 15a of axicon ring mirror 15 via grating 16. The spherical mirror 17 and reflecting grating 16 lend themselves to testing the surface 15a of the axicon ring mirror inasmuch as it provides illumination at an angle wide enough to illuminate the surface of the axicon which has a relatively large diameter.

The spherical mirror 17 and grating may be aligned for spacing tilt and decenter before the ring mirror axicon 15 is added to the null corrector arm 13.

The interferometer proper 14 utilizes a coaxial reference arrangement i.e., a mirror 18 disposed with its center on the optical axis although it should be noted that other types of interferometers could be used, e.g., a Twyman-Green type.

A beam splitter 20 is located coaxially with the reference mirror 18. A laser source 19, e.g., HeNe is disposed to direct a beam through beamsplitter 20 and reference mirror 18. The mirror transmits half the light and reflects half. The portion of the wavefront reflected by reference mirror 18 is reflected by beamsplitter 20 to surface 21 as the reference beam or wavefront.

The portion of the beam which is transmitted through reference mirror 18 enters the null corrector arm 13 and is reflected by sphere 17 and reflecting grating 16 to surface 15a of axicon ring mirror 15. The beam is then reflected back to grating 17 and spherical mirror 17 where it is transmitted as a perfect wavefront to beamsplitter 20. Beamsplitter 20 reflects this wavefront to surface 21 where it interfers with the reference wavefront reflected from reference mirror 18 to form a fringe pattern. This fringe pattern is indicative of deviation of the test surface, in this case the axicon ring mirror surface 15a, from the desired figure. The surface 21 may be the screen of a vidicon or PMI tube or any other device for permanently recording the fringe pattern which may be used by a technician to correct imperfections in the figure of the test surface 15a.

The type and figure of the surface to be tested is determinate of the spacings of the grating which must be carefully designed. Just as with a lens type null corrector a different grating must be designed and fabricated for each optical surface to be tested.

An example of a grating design for a given axicon test surface is shown below.

For an axicon with surface defined by the following parameters:

$$x = aY + bY^2 + cY^3 + dY^4,$$

where

$Y = Y - 215.9mm$, $a = -0.7687131$,

$b = -2.692567e-3$, $c = -5.393483e-6$,

$d = -9.984406e-9$.

the grating parameters up to seven orders for the polynominal of Eq 3 would be

$F_0 = 364.5158$, $F_1 = -33.46055$,

$F_2 = 2.403959$, $F_3 = -7.165991e-2$,

$F_4 = 1.051776e-3$, $F_5 = -7.737556e-6$,

$F_6 = 2.29755e-8$.

Scale is 260 mm to the inch.

For any surface where the surface parameters are given, the parameters of the required grating may be determined, e.g., by an appropriately programmed computer.

Figure 3 shows a null corrector arm for measuring the surface figure of an aspheric 31. In this case the circularly ruled grating 32 is transmissive, i.e., the beam passes through it as opposed to reflecting from it as in the test arrangement of Figure 2. The null corrector arm of Figure 3 may be substituted for null corrector arm 13 of Figure 2 to produce a test wavefront reflected from the surface of aspheric 13 for combination with the reference wave to form a fringe pattern indicative of deviation of actual surface figure from desired surface figure of the aspheric.

The grating 32 may be designed by calculating the spacings between rulings by use of the polynomial of Eq(3) and the aspheric surface equation.

$$x = \frac{cr^2 c}{1 + \sqrt{1 - pc^2 r^2}} + dr^6 + er^8 + fr^{10}.$$

where the variables are known.

It should be noted that the null corrector arms of Figures 2 and 3 show configurations wherein the wavefront makes a double pass relative to the gratings. In these cases the wavefront entering the interferometer after the second pass is the perfect or near perfect wavefront referred to. The second pass can be useful to correct the beam to eliminate unwanted aberrations, e.g., those caused by spherical mirror 17. Further, the design of the grating must take this doublepass into consideration.

However, in each case the doublepass can be eliminated by redirecting the wavefront, e.g., by a mirror so that it is combined with the reference wavefront prior to the second pass and interfering it with the reference wavefront.

Figure 4 a null corrector arm for testing the surface figure of a Wolter mirror or paraboloid segment 41 where the grating 42 is reflecting. Here again the null corrector arm of Figure 4 may be substituted for the null corrector arm 13 of Figure 2 to test the surface of the paraboloid segment 41. The grating, i.e., the spacing variations are determined with the aid of the polynomial of Eq(3) and the known variables which define the surface of the paraboloid segment 41.

Figure 4 illustrates a situation in which the wavefront makes a single pass to a reflective type grating.

Further, the wavefront reflected from the paraboloid segment 41 does not reflect back on itself, as such, but is converted to a perfect or near perfect wavefront only after it reaches and is reflected by grating 42.

Thus, it can be seen that the unequally spaced circularly ruled grating used in the null corrector arm of an interferometer is a powerful tool for testing surface figures of various optical surface. A single grating can take the place of a conventional lens type null corrector which may use a large number of lens and which is difficult if not impossible to design for the more complicated surfaces to be tested.

Other modifications of the present invention are possible in light of the above description which should not be construed as placing restrictions on the present invention beyond those expressly recited in the claims which follow:

WHAT IS CLAIMED IS:

1. In an apparatus for testing the optical figure of a reflecting test surface, comprising;

a laser source emitting a beam directed toward the reflecting surface,

a circularly ruled grating so disposed relative to said laser source and the test surface and having the rulings so spaced to cause each ray of the beam to reflect undeviated back on itself from the test surface.

2. In an apparatus according to Claim 1 wherein the spacings between said rulings are unequal.

3. In an apparatus according to Claim 2 wherein the spacings between said rulings are determined in accordance with the desired surface figure of the test surface.

4. In an apparatus according to Claim 3 further comprising;

a reference laser source,

means combining said reference laser source and the reflected beam of the test surface to generate a fringe pattern indicative of deviation of the figure of the test surface from the desired surface figure.

5. In an apparatus according to Claim 4 further including, recording means for recording said fringe pattern.

6. In an apparatus according to Claim 4 wherein said grating is of the transmissive type and is disposed between said laser source and the test surface.

7. In an apparatus according to Claim 4 wherein said grating is of the reflecting type and is disposed relative to the test surface to reflect the beam reflected from the test surface.

8. An apparatus according to Claim 2 wherein the spacings between said rulings are given by the function $F_r = \sum_{n=0}^{k} F_n r^n$ where $F_r$ is the radius of said rulings.

9. An apparatus according to Claim 4 wherein the spacings between said rulings are given by the function $F_r = \sum_{n=0}^{k} F_n r^n$ where $F_r$ is the radius of said rulings.

10. An apparatus according to Claim 6 wherein the spacings between said rulings are given by the function $F_r = \sum_{n=0}^{k} F_n r^n$ where $F_r$ is the radius of said rulings.

11. An apparatus according to Claim 7 wherein the spacings between said rulings are given by the function $F_r = \sum_{n=0}^{k} F_n r^n$ where $F_r$ is the radius of said rulings.

12. In an apparatus for testing the optical figure of a reflecting surface, comprising;

a laser source emitting a beam directed toward the reflecting surface,

a circularly ruled grating disposed to reflect said beam,

the rulings of said grating being so spaced to cause the beam reflected from said grating to be corrected for deviations caused by the test surface.

13. In an apparatus according to Claim 12 wherein the spacings between said rulings are unequal.

14. In an apparatus according to Claim 13 wherein the spacings between said rulings are determined in accordance with the desired surface figure of the test surface.

15. In an apparatus according to Claim 14 further comprising;

a reference laser source,

means combining said reference laser source and the reflected beam of the test surface to generate a fringe pattern indicative of deviation of the figure of the test surface from the desired surface figure.

16. In an apparatus according to Claim 15 further including, recording means for recording said fringe pattern.

17. In an apparatus for testing the optical figure of a test surface, comprising;

a source of nonchromatic light directed toward the test surface,

a circularly ruled grating so disposed relative to said source and the test surface and having the rulings so placed to cause each ray of the beam to reflect or transmit through the surface as a substantially perfect wavefront.

18. In an apparatus according to Claim 17 wherein the spacings between said rulings are unequal.

19. In an apparatus according to Claim 18 wherein the spacings between said rulings are determined in accordance with the desired surface figure of the test surface.

20. A diffraction grating,

a plurality of concentric grooves formed therein,

each of said grooves unequally spaced in accordance with the function $F_r = \sum_{n=0}^{k} F_n r^n$ where $F_r$ is the radius of said rulings.

0137976

1/1

FIG. 1

FIG. 2

FIG. 3

FIG. 4